Europäisches Patentamt

European Patent Office

Office européen des brevets

(19)

(11) Veröffentlichungsnummer: **0 216 982**
**B1**

(12) # EUROPÄISCHE PATENTSCHRIFT

(45) Veröffentlichungstag der Patentschrift:
03.05.89

(51) Int. Cl.⁴: **F 16 K 17/04**

(21) Anmeldenummer: **86102328.1**

(22) Anmeldetag: **22.02.86**

(54) **Federbelastetes Sicherheitsventil.**

(30) Priorität: **12.03.85 DE 3508685**

(43) Veröffentlichungstag der Anmeldung:
**08.04.87 Patentblatt 87/15**

(45) Bekanntmachung des Hinweises auf die Patenterteilung:
**03.05.89 Patentblatt 89/18**

(84) Benannte Vertragsstaaten:
**AT FR GB NL**

(56) Entgegenhaltungen:
**EP-A- 0 158 776**
**AT-B- 298 180**
**DE-A- 1 775 929**
**GB-A- 1 524 400**
**US-A- 2 597 057**
**US-A- 4 103 662**

(73) Patentinhaber: **MESSER GRIESHEIM GMBH, Hanauer Landstrasse 330, D-6000 Frankfurt/Main 1 (DE)**

(72) Erfinder: **Tocha, Klaus, Eichenfeldstrasse 64, D-4018 Langenfeld (DE)**
Erfinder: **Klein, Wolfgang, Kamper Weg 221a, D-4000 Düsseldorf 12 (DE)**

## Beschreibung

Die Erfindung betrifft ein Sicherheitsventil mit in einem Ventilgehäuse geführten federbelasteten Ventilverschlußkörper nach dem Oberbegriff des Anspruches 1, wie es aus der US-A-2 597 057 bekannt ist.

An Sicherheitsventile wird die Anforderung gestellt, daß sie nach dem erstmaligen Ansprechen möglichst bald wieder schließen, d.h. eine möglichst kleine Schließdruckdifferenz haben, um unnötige Medienverluste aufgrund eines sofort zu behebenden Störfalles zu vermeiden. Um eine einwandfreie Dichtheit nach dem Schließen auch bei kryogenen Temperaturen sicherzustellen, ist vor allem bei länger andauernden Störfällen eine vergrößerte Schließdruckdifferenz wünschenswert. Wegen der bei tiefen Temperaturen eintretenden Materialverhärtung ist eine größere Schließkraft notwendig, damit das Ventil nach dem Schließen dicht ist. An die Funktionsweise des Sicherheitsventils werden also bei kurzen Störfällen und bei langen anhaltenden Störfällen völlig unterschiedliche Forderungen gestellt. Die bekannten Sicherheitsventile erfüllen diese Forderungen nicht oder nur unvollkommen.

Der Erfindung liegt die Aufgabe zugrunde, ein Sicherheitsventil zu schaffen, welches von Umgebungstemperatur bis Kryotemperatur trotz sich verändernder Medien- und Strömungszustände stabile Funktion aufweist, indem sich seine Schließdruckdifferenz mit sinkender Temperatur selbständig vergrößert.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Bei dem erfindungsgemässen Sicherheitsventil strömt das Medium frei ab, Ventilverschlußkörper-Führung und Passung liegen nicht im Gasstrom. Im Betrieb bei Umgebungstemperatur lassen sich sehr kleine Schließdruckdifferenzen einstellen. Die Einstellung auf den gewünschten Wert erfolgt auf dem Prüfstand, die einmal gefundene Einstellung wird verplombt. Bei Verwendung des erfindungsgemäßen Sicherheitsventils im Tieftemperaturbereich ist beim erstmaligen Ansprechen die Schließdruckdifferenz noch geringer als bei Umgebungstemperatur, da das durch die Steuerdruckbohrung in den Steuerdruckraum einströmende kalte Gas sich erwärmt und ausdehnt, wodurch die eingestellte Schließdruckdifferenz weiter verringert wird. Wird der Störfall nicht behoben, strömt also weiterhin kaltes Gas aus, so kühlt sich das erfindungsgemäße Sicherheitsventil ab, wodurch eine weitere Verbindung zwischen Steuerdruckraum und Gasaustrittsraum, nämlich der Spalt im Gleitlager zwischen Ventilverschlußkörper und Ventilgehäuse, ihren Querschnitt vergrößert. Im Steuerdruckraum baut sich daher ein geringerer Druck auf und die Schließdruckdifferenz wird größer. Je größer jedoch die Schließdruckdifferenz wird, um so stabiler ist die Arbeitsweise eines Sicherheitsventils. Es wird unempfindlich gegen nachteilige Zuleitungs- und Ausblaseleitungseinflüsse. Außerdem sind die Dichtkräfte nach dem Schließen direkt proportional der Schließdruckdifferenz. Dies ist im Tieftemperaturbereich wichtig, weil Weichstoffdichtungen mit abnehmender Temperatur hart werden und zur Abdichtung dann größere Kräfte benötigen. Außerdem wird durch das längere Abblasen auf ein tieferes Druckniveau der Abstand zum maximal zulässigen Behälterdruck größer. Es dauert also länger, bis der unzulässige Behälterzustand wieder erreicht wird.

Die Zeichnungen veranschaulichen ein Ausführungsbeispiel der Erfindung.

Es zeigen:

Fig. 1 den Längsschnitt durch ein Sicherheitsventil in schematischer Form,

Fig. 2 einen Schnitt entlang der Linie A-A in Fig. 1 bei Umgebungstemperatur,

Fig. 3 einen Schnitt entlang der Linie A-A in Fig. 1 bei tiefer Temperatur,

Fig. 4 einen Längsschnitt durch eine ausgeführte Konstruktion.

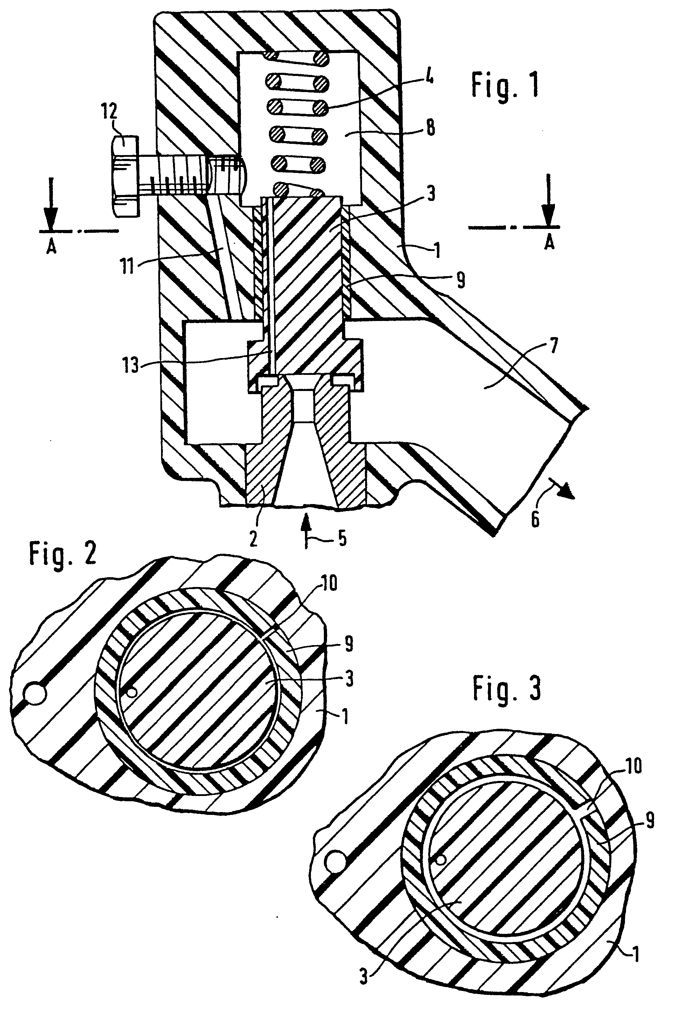

Ein in Fig. 1 in schematischer Weise dargestelltes erfindungsgemäßes Sicherheitsventil besteht in seinen wesentlichen Teilen aus Ventilgehäuse 1, Düse 2 für den Gaseintritt, Ventilverschlußkörper (Kegel) 3 und Kegelfeder 4. Pfeil 5 bezeichnet den Gaseintritt und Pfeil 6 den Gasaustritt. Die Düse 2, auf welcher der Kegel 3 mit seiner Kegeldichtfläche aufliegt, mündet in einen Gasaustrittsraum 7. Die Kegelfeder 4 ist im Steuerdruckraum 8 angeordnet, der vom Ventilgehäuse 1 gebildet wird. Ein Gleitlager zwischen Kegel 3 und Ventilgehäuse 1 ist als Führungsbuchse 9 aus Kunststoff dargestellt. Die Führungsbuchse 9 ist mit einem Längsschlitz 10 versehen, wie aus Fig. 2 und 3 ersichtlich, und besitzt auffedernde Eigenschaften.

Erfindungsgemäß weist der Steuerdruckraum 8 mehrere Verbindungen zum Gasaustrittsraum 7 auf. Eine dieser Verbindungen ist eine Steuerdruckleitung 11, deren Strömungsquerschnitt durch eine Steuerdruckschraube 12 eingestellt werden kann. Eine weitere Verbindung ist eine Steuerdruckbohrung 13 im Kegel 3. Sie mündet an der Unterseite des Kegels 3 außerhalb des Dichtsitzes. Es können auch mehrere Steuerdruckbohrungen 13 vorgesehen werden. Eine dritte Verbindung ist ein Längsschlitz 10 in der Führungsbuchse 9 und der Spalt für das notwendige Spiel des Kegels 3.

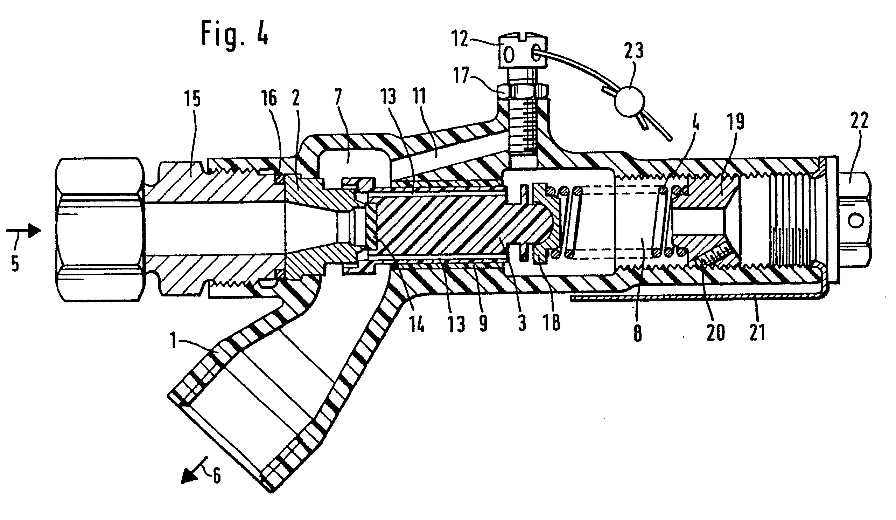

Bei der in Fig. 4 dargestellten ausgeführten Konstruktion wurden für gleiche Teile die Bezugsnummern von Fig. 1 bis 3 beibehalten. Hierbei besitzt der Kegel 3 zwei Steuerdruckbohrungen 13. Die Dichtfläche des Kegels 3 ist mit einer Kegeldichtung 14 aus Weichmaterial ausgerüstet. Die Düse 2 ist mittels eines Düsenanschlußstückes 15 und einer Dichtung 16 in das Ventilgehäuse 1 eingeschraubt. Die Steuerdruckschraube 12 ist durch eine Gegenmutter 17 gesichert. Zwischen Kegel 3 und Kegelfeder 4 befindet sich ein Federteller 18. Die Kraft der Kegelfeder 4 wird durch eine Stellschraube 19 eingestellt, welche von einem Gewindestift 20 gesichert ist. An dem Ventilgehäuse 1 ist ferner ein Typenschild 21 mittels Schraube 22 angebracht. Die auf dem Prüfstand gefundene optimale Einstellung des Sicherheitsventils wird durch einen Plombendraht 23 durch die Steuerdruckschraube 12 und die Schraube 22 gesichert.

Zunächst sei die Funktionsweise des erfindungsgemäßen Sicherheitsventils bei Umgebungstemperatur geschildert. Mit Erreichen des Ansprechdruckes, der von der Einstellung der Kegelfeder 4 abhängig ist, wird das Sicherheitsventil durch die Entlastung der Kegeldichtung 14 undicht. Dieser kleine Leckmassenstrom strömt unter den Kegel 3 und wirkt hier bei kleinem Druck auf eine im Vergleich zur Dichtfläche große Fläche. Infolgedessen reagiert das kraftmäßig im Gleichgewicht befindliche Federdrucksystem durch schlagartige Vollöffnung mit einem vollen Hub des Kegels 3. Das Gas strömt nun mit Schallgeschwindigkeit aus der Düse 2 aus. Große Impuls-, Umlenk- und Druckkräfte wirken unter dem Kegel 3 und drücken ihn nach oben. Auch dann, wenn der Druck im Behälter erheblich sinkt, könnten die Federkräfte allein den Kegel nicht zum Schließen bringen. Ein Schließen des Sicherheitsventils innerhalb des gewünschten Druckbereiches ausschließlich durch Federkraft ist unmöglich. Sobald die Vollöffnung erreicht ist, strömt jedoch aufgrund des Druckgefälles Gas durch die Steuerdruckbohrung 13 in den Steuerdruckraum 8. Hier baut sich ein Druck auf, der über die Stirnfläche des Kegels 3 die Wirkung einer zusätzlichen Kraft hat. Die Größe des Drucks im Steuerdruckraum 8 und damit die Größe der Gegenkraft läßt sich durch die Steuerdruckschraube 12 einstellen. Diese verschließt den Strömungsquerschnitt der Steuerdruckleitung 11 mehr oder weniger. Ist der Strömungsquerschnitt klein, baut sich ein hoher Druck im Steuerdruckraum 8 auf und umgekehrt. Die gemeinsamen Kräfte der Kegelfeder 4 und des Drucks auf die Stirnfläche des Kegels 3 bewirken, daß der Kegel 3 in Schließstellung zurückkehrt, sobald der Druck im Behälter auf das erwünschte Druckniveau abgefallen ist.

Bei kryogenen Temperaturen verhält sich das erfindungsgemäße Sicherheitsventil zunächst genauso wie bei Umgebungstemperatur. Zusätzlich wird jedoch ausgenutzt, daß der Druck im Steuerdruckraum 8 nicht nur durch den Strömungsquerschnitt der Steuerdruckleitung 11 bestimmt wird, sondern auch durch den temperaturabhängig sich verändernden Spalt im Gleitlager zwischen Kegel 3 und Ventilgehäuse 1. Dieser Spalt ist für ein ausreichendes mechanisches Spiel notwendig. Zunächst einmal kann durch die Einstellung der Steuerdruckschraube 12 der Einfluß von fertigungstechnisch notwendigen Toleranzen, also unterschiedlichem Spiel, ausgeglichen werden. Dies geschieht während der Einstellung des Sicherheitsventils auf dem Prüfstand. Erfindungsgemäß wird die Werkstoffkombination zwischen Kegel 3 und Ventilgehäuse 1 so gewählt, daß der Spalt im Gleitlager mit abnehmender Temperatur größer wird. Dies kann man z.B. erreichen, indem der Kegel aus Aluminium und das Gehäuse aus Edelstahl gefertigt werden, ohne daß eine spezielle Führungsbuchse 9 vorgesehen wird. Da der innenliegende Kegel naturgemäß kälter ist als das der Umgebung ausgesetzte Gehäuse schrumpft er stärker als das Gehäuse. Der Effekt wird durch die werkstoffabhängige Wärmeausdehnung noch verstärkt.

Das in den Figuren dargestellte Ausführungsbeispiel zeigt jedoch eine Ausführungsform mit Führungsbuchse 9. Diese besteht aus Kunststoff, besitzt einen Längsschlitz 10 und hat auffedernde Eigenschaften. Kegel 3 und Ventilgehäuse 1 bestehen aus ähnlichem Werkstoff. Der Wärmeausdehnungskoeffizient des Kunststoffs ist erheblich größer als der von Metall. Bei Abkühlung ist wiederum der innenliegende Kegel 3 das kälteste Teil. Die Führungsbuchse 9 wird durch die Abkühlung in der Wandstärke dünner und an Umfang kürzer, d.h. der Längsschlitz 10 wird breiter. Da die Führungsbuchse 9 auffedert, drückt sie sich gegen das Ventilgehäuse 1, wodurch der Spalt größer wird. Es vergrößert sich somit das Radialspiel zwischen Kegel 3 und Führungsbuchse 9.

Beim ersten Ansprechen des erfindungsgemäßen Sicherheitsventils geschieht folgendes, wenn es an einen Behälter mit einem kryogenen Medium angeschlossen ist:

Das Gas strömt aus dem Behälter und erwärmt sich, während die Rohrleitung und die Armaturen kalt werden. Das kalte Gas strömt in den Steuerdruckraum 8, wo es sich erwärmt und ausdehnt. Dadurch wird sein Druck größer als der Druck, der sich bei einem Medium mit Umgebungstemperatur einstellt. Dies verursacht ein sehr rasches Schließen des Sicherheitsventils, d.h. die Schließdruckdifferenz ist sehr klein und das Sicherheitsventil schließt wesentlich früher als bei einem Medium mit Umgebungstemperatur.

Wird die Ursache für den unerwünschten Druckanstieg im Behälter nicht abgestellt, wiederholt sich der Vorgang, wobei sich das Ventil immer stärker abkühlt. Da sich das Gas im Steuerdruckraum 8 dabei nur noch geringfügig erwärmen kann, würde sich die Schließdruckdifferenz dem Wert bei Umgebungstemperatur immer mehr nähern.

Da sich jedoch gemäß der Erfindung der Spalt im Gleitlager zwischen Kegel 3 und Ventilgehäuse 1 beim Abkühlen vergrößert, strömt immer mehr Gas aus dem Steuerdruckraum 8 nicht nur durch die Steuerdruckleitung 11, sondern auch durch diesen sich vergrößernden Spalt und den sich entsprechend vergrößernden Längsschlitz 10 in den Gasaustrittsraum 7 zurück. Der im Steuerdruckraum 8 aufgebaute Druck wird infolgedessen immer kleiner. Daher kann sich das Sicherheitsventil erst schließen, wenn der Druck im Behälter erheblich abgesunken ist. Der Schließdruck wandert also zu kleineren Werten, d.h. es entsteht eine größere Schließdruckdifferenz.

Durch dieses selbstregelnde Verhalten des Sicherheitsventils wird erreicht, daß bei kurzzeitigen Drucküberschreitungen (Störfälle) mit kleinen Schließdruckdifferenzen und damit geringen Gasverlusten gearbeitet wird. Bei länger andauernden Störfällen wird dagegen der Schließdruck kleiner und damit der Abstand zum maximal zulässigen Behälterdruck größer. Dies ist wichtig, weil der Störfall unbehoben fortbesteht.

Das erfindungsgemäße Sicherheitsventil ist aufgrund seiner Eigenschaften besonders unempfindlich gegen Zweiphasenströmungen und undefinierbare, sich stetig verändernde Gaszustände. Im Störfall steht viel Zeit zur Beseitigung der Störung zur Verfügung. Die Dichtkräfte, die proportional zur Schließdruckdifferenz sind, sind groß, weil der Ansprechdruck das Kräftegleichgewicht darstellt und somit die Federkräfte stärker überwiegen. Dadurch können auch temperaturbedingt sich verhärtende Dichtwerkstoffe für die Kegeldichtung 14 einwandfrei abdichten.

**Patentansprüche**

1. Sicherheitsventil mit in einem Ventilgehäuse (1) geführten federbelasteten Ventilverschlußkörper (3), der beim Ansprechen einen vollen Hub ausführt und mit seiner Dichtfläche auf einer Austrittsöffnung einer mit einem Speicherbehälter in Verbindung stehenden Düse (2) aufsitzt, mit einem die Dichtfläche des Ventilverschlußkörpers und die Austrittsöffnung der Düse umgebenden Gasaustrittsraum (7), wobei die Kegelfeder (4) in einem Steuerdruckraum (8) angeordnet ist, welcher mehrere Verbindungen (11, 13) zum Gasausaustrittsraum aufweist, von denen eine als im Ventilgehäuse (1) angeordnete Steuerdruckleitung (11) einen einstellbaren Strömungsquerschnitt besitzt und eine weitere zumindest als eine Steuerdruckbohrung (13) im Ventilverschlußkörper (3) angebracht ist und an dessen Unterseite außerhalb des Dichtsitzes mündet, gekennzeichnet durch eine zusätzliche Verbindung (10) zwischen dem Steuerdruckraum (8) und dem Gasaustrittsraum (7), welche einen bei sinkender Temperatur sich vergrößernden Strömungsquerschnitt aufweist.

2. Sicherheitsventil nach Anspruch 1, dadurch gekennzeichnet, daß die zusätzliche Verbindung als Spalt in einem zwischen Ventilverschlußkörper (3) und Ventilgehäuse (1) angeordneten Gleitlager ausgebildet ist, wobei der Effekt des sich vergrößernden Strömungsquerschnittes durch die Werkstoffauswahl erreicht wird.

3. Sicherheitsventil nach Anspruch 2, dadurch gekennzeichnet, daß das Gleitlager eine längsgeschlitzte, auffedernde Führungsbuchse (9) aus Kunststoff ist.

**Claims**

1. Safety valve having a spring-loaded valve closure element (3), which is guided in a valve housing (1), performs a complete stroke upon acutation and is seated with its sealing surface on an outlet opening of a nozzle (2) in connection with a reservoir, having a gas outlet space (7), which surrounds the sealing surface of the valve closure element and the outlet opening of the nozzle, the conical spiral spring (4) being arranged in a control pressure space (8), which has a plurality of connections (11, 13) to the gas outlet space, one of which connections has, as a control pressure line (11) arranged in the valve housing (1), an adjustable flow cross-section, and another of which is fitted, at least as a control pressure bore (13), in the valve closure element (3) and opens out on the underside of the latter outside the seal seat, characterized by an additional connection (10) between the control pressure space (8) and the gas outlet space (7), which connection has a flow cross-section which increases with decreasing temperature.

2. Safety valve according to Claim 1, characterized in that the additional connection is designed as a gap in a sliding bearing arranged between valve closure element (3) and valve housing (1), the effect of the increasing flow cross-section being achieved by the selection of materials.

3. Safety valve according to Claim 2, characterized in that the sliding bearing is a longitudinal slit, resilient guide bush (9) of plastic.

**Revendications**

1. Soupape de sûreté comportant un boîtier (1) guidant un organe de fermeture de soupape (3) chargé par un ressort, et qui lorsqu'il est sollicité, exécute une course complète, sa surface d'étanchéité s'appuyant sur un orifice de sortie d'une buse (2) communiquant avec un réservoir, une chambre de sortie de gaz (7) entourant la surface d'étanchéité de l'obturateur de la soupape et l'orifice de sortie de la buse, le ressort (4) appliqué à l'obturateur étant placé dans une chambre de pression de commande (8) qui comporte plusieurs liaisons (11, 13) vers la chambre de sortie de gaz, et parmi celles-ci une liaison est une conduite de pression de commande (11) associée au boîtier (1) de la soupape, celle-ci présentant une section de passage réglable et une autre liaison étant un perçarge de pression de commande (13) dans l'obturateur (3), sa face inférieure débouchant à l'extérieur du siège d'étanchéité, comme conduite de pression de commande (11) réalisée dans le boîtier (1), soupape caractérisée par une liaison complémentaire (10) entre la chambre de pression de commande (8) et la chambre de sortie de gaz (7) qui, lorsque la température chute, voit sa section de passage augmenter.

2. Soupape de sûreté selon la revendication 1, caractérisée en ce que la liaison complémentaire est une fente dans un palier de glissement réalisé entre l'obturateur de soupape (3) et le boîtier de soupape (1), l'effet de la section d'écoulement qui augmente dépendant du. choix du matériau.

3. Soupape de sûreté selon la revendication 2, caractérisée en ce que le palier de glissement est une douille de guide (9) en matière synthétique, élastique, fendue longitudinalement.

Fig. 1

Fig. 2

Fig. 3

Fig. 4

EP 0 216 982 B1